# EUROPEAN PATENT APPLICATION

(11) **EP 4 646 017 A1**
(43) Date of publication of application: **05.11.2025**
(21) Application number: 23910227.0
(22) Date of filing: 18.12.2023
(51) Int. Cl.: H04W 80/06

(54) **METHOD AND APPARATUS IN NODE USED FOR WIRELESS COMMUNICATION**

(30) Priority: 26.12.2022 CN 202211673650
(71) Applicant: SHANGHAI LANGBO COMMUNICATION TECHNOLOGY COMPANY LIMITED, Shanghai 200240 (CN)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2023/139383
(87) International publication number: WO 2024/140297

(57) **Abstract**

Disclosed in the present application are a method and apparatus in a node used for wireless communication. A first node receives first CSI configuration information, receives first signaling, receives a first RS resource, and sends first CSI reporting, wherein R index groups respectively correspond to R ranks on a one-to-one basis; the first signaling is used for determining a first port group; the first CSI reporting comprises a first rank and a first CQI; a first index group is an index group among the R index groups that corresponds to the first rank; a reference port group comprises all ports of the first RS resource that are indicated by the first index group; the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

## Description

### Technical Field

The present application relates to a transmission method and apparatus in a wireless communication system, and in particular to a transmission method and apparatus for wireless signals in a wireless communication system supporting a cellular network.

### Background Art

In a wireless communication system supporting multi-antenna transmission, it is a common technique for UE (User Equipment) to generate and feedback CSI (Channel Status Information) based on at least one of channel or interference measurement to assist the base station in multi-antenna processing. In the 5G NR (New Radio) system, CSI reporting comprises at least one of {a CRI (CSI-RS Resource Indicator), an RI (Rank indication), a PMI (Precoding matrix indicator), and a CQI (Channel quality indicator)}. Research work on network energy efficiency began in NR R (Release, version)-18, comprising some key techniques, for example, a dynamical adaptation of spatial elements, such as an active transceiver chain, an active antenna panel, and an update of CSI-RS configuration.

### Summary of the Invention

The inventor discovered through research that how to generate CSI (Channel Status Information) reporting based on RS (Reference Signal) resources is a key problem.

In view of the above problem, the present application discloses a solution. It should be noted that in the description of the present application, a multi-antenna panel is only used as a typical application scenario or example; and the present application can also be applied to the application scenario of a single-antenna panel, and furthermore, using a unified design scheme for different scenarios (including, but not limited to, multi-antenna panels, single-antenna panels, etc.) can also help to reduce hardware complexity and cost. In the case of no conflict, embodiments and features in the embodiments in any node of the present application can be applied to any other node. In the case of no conflict, the embodiments and features in the embodiments of the present application may be arbitrarily combined with each other.

As one embodiment, the interpretation of the terminologies in the present application refers to the definition of the specification protocol TS36 series of 3GPP.

As one embodiment, the interpretation of the terminologies in the present application refers to the definition of the specification protocol TS38 series of 3GPP.

As one embodiment, the interpretation of the terminologies in the present application refers to the definition of the specification protocol TS37 series of 3GPP.

As one embodiment, the interpretation of the terminology in the present application refers to the definition of the specification protocol of IEEE (Institute of Electrical and Electronics Engineers).

The present application discloses a method in a first node used for wireless communication, characterized by comprising:
receiving first CSI configuration information; receiving a first signaling; receiving a first RS resource; and
sending first CSI reporting;
wherein, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

As one embodiment, the problem to be solved by the present application comprises: the CSI reporting is generated based on the measurement of the RS resource.

According to one aspect of the present application, the method is characterized in that the first condition comprises the port of the first RS resource that is indicated by each index in the corresponding index group being associated with the first port group; and the first CQI is calculated using all ports in the reference port group as a condition.

According to one aspect of the present application, the method is characterized in that the first CQI is calculated using all ports in the reference port group that are associated only with the first port group as a condition.

According to one aspect of the present application, the method is characterized in that the number of ports comprised in the reference port group is equal to the first rank, a target port group comprises all ports in the reference port group that are associated with the first port group, and the rank used in the calculation of the first CQI is equal to the number of ports comprised in the target port group.

According to one aspect of the present application, the method is characterized in that the rank used in the calculation of the first CQI is equal to the first rank only when each port in the reference port group is associated with the first port group.

According to one aspect of the present application, the method is characterized in that the first CSI reporting is sent only when at least one rank of the R ranks satisfies the first condition.

According to one aspect of the present application, the method is characterized by comprising:
receiving at least one RS resource other than the first RS resource in a first RS resource group; and
receiving a second RS resource group;
wherein, the first RS resource group is configured for channel measurement, and the second RS resource group is configured for interference measurement; the first CSI reporting comprises a first RS resource indicator, and the first RS resource indicator is used for indicating the first RS resource from the first RS resource group; and the first rank and the first CQI are obtained using the first RS resource indicator as a condition.

The present application discloses a method in a second node used for wireless communication, characterized by comprising:
sending first CSI configuration information; sending a first signaling; sending a first RS resource; and
receiving first CSI reporting;
wherein, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

According to one aspect of the present application, the method is characterized in that the first condition comprises the port of the first RS resource that is indicated by each index in the corresponding index group being associated with the first port group; and the first CQI is calculated using all ports in the reference port group as a condition.

According to one aspect of the present application, the method is characterized in that the first CQI is calculated using all ports in the reference port group that are associated only with the first port group as a condition.

According to one aspect of the present application, the method is characterized in that the number of ports comprised in the reference port group is equal to the first rank, a target port group comprises all ports in the reference port group that are associated with the first port group, and the rank used in the calculation of the first CQI is equal to the number of ports comprised in the target port group.

According to one aspect of the present application, the method is characterized in that the rank used in the calculation of the first CQI is equal to the first rank only when each port in the reference port group is associated with the first port group.

According to one aspect of the present application, the method is characterized in that the first CSI reporting is sent only when at least one rank of the R ranks satisfies the first condition.

According to one aspect of the present application, the method is characterized by comprising:
sending at least one RS resource other than the first RS resource in a first RS resource group; and sending a second RS resource group;
wherein, the first RS resource group is configured for channel measurement, and the second RS resource group is configured for interference measurement; the first CSI reporting comprises a first RS resource indicator, and the first RS resource indicator is used for indicating the first RS resource from the first RS resource group; and the first rank and the first CQI are obtained using the first RS resource indicator as a condition.

The present application discloses a first node device used for wireless communication, comprising:
a first receiver, receiving first CSI configuration information, receiving a first signaling, and receiving a first RS resource; and
a first transmitter, sending first CSI reporting;
wherein, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

The present application discloses a second node device used for wireless communication, comprising:
a second transmitter, sending first CSI configuration information, sending a first signaling, and sending a first RS resource; and
a second receiver, receiving first CSI reporting;
wherein, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

As one embodiment, compared with the traditional solution, the present application has the following advantages:
when the CSI reporting is generated, different application scenarios are considered, such as different ports, different beams, different antennas, and different spatial characteristics.

### Brief Description of the Drawings

Other features, purposes and advantages of the present application will become more apparent from reading the detailed description of the non-limiting embodiments made with reference to the following drawings:
FIG. 1 shows a flowchart of first CSI configuration information, a first signaling, a first RS resource and first CSI reporting according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of transmission according to one embodiment of the present application;
FIG. 6 shows a schematic diagram of a first CQI according to one embodiment of the present application;
FIG. 7 shows a schematic diagram of the first CQI according to another embodiment of the present application;
FIG. 8 shows a schematic diagram of the first CQI according to another embodiment of the present application;
FIG. 9 shows a schematic diagram of the first CQI according to another embodiment of the present application;
FIG. 10 shows a schematic diagram of first CSI reporting according to one embodiment of the present application;
FIG. 11 shows a structural block diagram of a processing apparatus used in a first node device according to one embodiment of the present application; and
FIG. 12 shows a structural block diagram of a processing apparatus used in a second node device according to one embodiment of the present application.

### Detailed Description of Embodiments

The technical solution of the present application will be further described in detail below in conjunction with the accompanying drawings. It should be noted that, in the case of no conflict, embodiments and features in the embodiments of the present application may be arbitrarily combined with each other.

### Embodiment 1

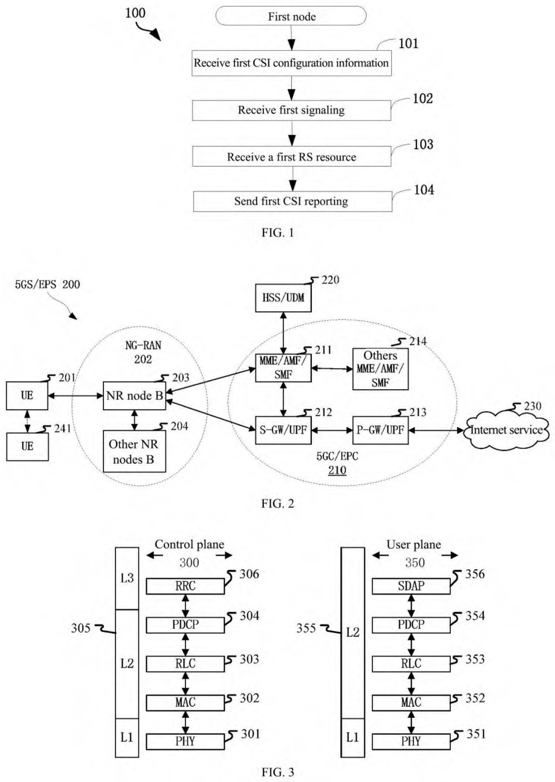

Embodiment 1 illustrates a flowchart of first CSI configuration information, a first signaling, a first RS resource and first CSI reporting according to one embodiment of the present application, as shown in FIG. 1. In 100 shown in FIG. 1, each box represents one step.

In Embodiment 1, a first node in the present application receives the first CSI configuration information in step 101; receives the first signaling in step 102; receives the first RS resource in step 103; and sends the first CSI reporting in step 104, wherein, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

As one embodiment, the first RS (Reference Signal) resource is configured by an RRC signaling.

As one embodiment, the first RS resource is indicated by part or all of domains in one RRC IE (Information Element).

As one embodiment, the first RS resource is triggered by a physical layer signaling.

As one embodiment, the first RS resource is triggered by the first signaling.

As one embodiment, the first RS resource is triggered by a DCI (Downlink Control Information) signaling.

As one embodiment, a time domain resource occupied by the first RS resource is later than a time domain resource occupied by the first signaling.

As one embodiment, the first RS resource is a CSI-RS (Channel Status Information-Reference Signal) resource or an SS/PBCH (Synchronization Signal/Physical Broadcast CHannel) block resource.

As one embodiment, the first RS resource is a CSI-RS resource.

As one embodiment, the first RS resource is an NZP (Non-Zero Power) CSI-RS resource.

As one embodiment, the first RS resource is a CSI-RS resource for channel measurement.

As one embodiment, the first RS resource is a CSI-RS resource or an SS/PBCH block resource for channel measurement.

Typically, the first RS resource is used for channel measurement.

As one embodiment, the first CSI configuration information is carried by a higher layer signaling.

As one embodiment, the first CSI configuration information is carried by an RRC signaling.

As one embodiment, the first CSI configuration information comprises one or more RRC IEs.

As one embodiment, the first CSI configuration information is IE CSI-ReportConfig.

As one embodiment, the name of the first CSI configuration information comprises CSI-ReportConfig.

As one embodiment, a first CSI resource configuration is IE CSI-ResourceConfig, and an identifier of the first CSI resource configuration is CSI-ResourceConfigId.

As one embodiment, the first CSI configuration information is used for indicating the first CSI resource configuration, and the first CSI resource configuration is used for indicating the first RS resource.

As one embodiment, the first CSI configuration information is used for indicating the first CSI resource configuration and a second CSI resource configuration, the first CSI resource configuration is used for indicating the first RS resource, and the second CSI resource configuration is used for indicating a second RS resource; and the first RS resource is used for channel measurement, and the second RS resource is used for interference measurement.

As one embodiment, the first CSI configuration information is used for indicating the first CSI resource configuration, the second CSI resource configuration, and a third CSI resource configuration, the first CSI resource configuration is used for indicating the first RS resource, the second CSI resource configuration is used for indicating the second RS resource, and the third CSI resource configuration is used for indicating a third RS resource; and the first RS resource is used for channel measurement, and the second RS resource and the third RS resource are used for interference measurement.

As one sub-embodiment of the above embodiment, a first receiver receives the third RS resource.

As one sub-embodiment of the above embodiment, the method in the first node comprises: receiving the third RS resource.

As one embodiment, the first RS resource is a CSI-RS resource for channel measurement, and the second RS resource is a CSI-IM (Channel State Information-Interference Measurement) resource.

As one embodiment, the first RS resource is a CSI-RS resource for channel measurement, the second RS resource is a CSI-IM resource, and the third RS resource is an NZP CSI-RS resource for interference measurement.

As one embodiment, the first CSI configuration information is used for indicating the first CSI resource configuration and the second CSI resource configuration, the first CSI resource configuration is used for indicating a first RS resource group, the first RS resource belongs to the first RS resource group, and the second CSI resource configuration is used for indicating a second RS resource group; and the first RS resource group is used for channel measurement, and the second RS resource group is used for interference measurement.

As one embodiment, the first CSI configuration information is used for indicating the first CSI resource configuration, the second CSI resource configuration and the third CSI resource configuration, the first CSI resource configuration is used for indicating the first RS resource group, the first RS resource belongs to the first RS resource group, the second CSI resource configuration is used for indicating the second RS resource group, the third CSI resource configuration is used for indicating a third RS resource group; and the first RS resource group is used for channel measurement, and the second RS resource group and the third RS resource group are used for interference measurement.

As one sub-embodiment of the above embodiment, the first receiver receives the third RS resource group.

As one sub-embodiment of the above embodiment, the method in the first node comprises: receiving the third RS resource group.

As one embodiment, the second RS resource belongs to the second RS resource group.

As one embodiment, the third RS resource belongs to the third RS resource group.

As one embodiment, the first CSI configuration information comprises a resourcesForChannelMeasurement domain, and the resourcesForChannelMeasurement domain comprised in the first CSI configuration information is used for indicating the first CSI resource configuration.

As one embodiment, the first CSI configuration information comprises a csi-IM-ResourcesForInterference domain, and the csi-IM-ResourcesForInterference domain comprised in the first CSI configuration information is used for indicating the second CSI resource configuration.

As one embodiment, the first CSI configuration information comprises an nzp-CSI-RS-ResourcesForInterference domain, and the nzp-CSI-RS-ResourcesForInterference domain comprised in the first CSI configuration information is used for indicating the third CSI resource configuration.

As one embodiment, the first RS resource group comprises a plurality of CSI-RS resources for channel measurement.

As one embodiment, the first RS resource group comprises a plurality of CSI-RS resources or SSB resources for channel measurement.

As one embodiment, the first RS resource group comprises a plurality of CSI-RS resources or SSB resources.

As one embodiment, the first RS resource group comprises a plurality of CSI-RS resources.

As one embodiment, the first RS resource group comprises a plurality of NZP CSI-RS resources.

As one embodiment, the first RS resource group comprises a plurality of CSI-RS resources for channel measurement, and the second RS resource group comprises a plurality of CSI-IM (Channel State Information-Interference Measurement) resources.

As one embodiment, the first RS resource group comprises a plurality of CSI-RS resources for channel measurement, the second RS resource group comprises a plurality of CSI-IM resources, and the third RS resource group comprises a plurality of NZP CSI-RS resources for interference measurement.

As one embodiment, the first RS resource group comprises a plurality of CSI-RS resources or SSB resources for channel measurement, and the second RS resource group comprises a plurality of CSI-IM resources.

As one embodiment, the first RS resource group comprises a plurality of CSI-RS resources or SSB resources for channel measurement, the second RS resource group comprises a plurality of CSI-IM resources, and the third RS resource group comprises a plurality of NZP CSI-RS resources for interference measurement.

Typically, a first CSI reporting configuration comprises a reporting amount of the first CSI reporting, and the reporting amount of the first CSI reporting comprises an RI (Rank Indicator) and a CQI (Channel Quality Indicator).

As one embodiment, the first CSI reporting is CSI reporting based on non-PMI (Precoding Matrix Indicator).

As one embodiment, the first CSI reporting configuration comprises the reporting amount of the first CSI reporting, and the reporting amount of the first CSI reporting comprises a CRI (CSI-RS Resource Indicator), an RI and a CQI.

As one embodiment, the first CSI reporting configuration comprises the reporting amount of the first CSI reporting, and the reporting amount of the first CSI reporting does not comprise a PMI.

As one embodiment, the first CSI reporting configuration comprises the reporting amount of the first CSI reporting, and the reporting amount of the first CSI reporting only comprises the CRI, the RI and the CQI.

As one embodiment, the first CSI reporting configuration comprises the reporting amount of the first CSI reporting, and the reporting amount of the first CSI reporting only comprises at least the RI and the CQI among the CRI, the RI and the CQI.

Typically, the reporting amount of the first CSI reporting comprises the RI and the CQI, the RI comprised in the reporting amount of the first CSI reporting indicates the first rank, and the first CQI is the CQI comprised in the reporting amount of the first CSI reporting.

As one embodiment, the reporting amount of the first CSI reporting only comprises the CRI, the RI and the CQI, a first RS resource indicator is the CRI comprised in the reporting amount of the first CSI reporting, the RI comprised in the reporting amount of the first CSI reporting indicates the first rank, and the first CQI is the CQI comprised in the reporting amount of the first CSI reporting.

As one embodiment, for the specific definitions of IE CSI-ReportConfig, resourcesForChannelMeasurement, csi-IM-ResourcesForInterference, nzp-CSI-RS-ResourcesForInterference, IE CSI-ResourceConfig, and CSI-ResourceConfigId, see Chapter 6.3.2 of 3GPP TS 38.331.

As one embodiment, the first CSI reporting is generated using at least the channel information obtained from a measurement of the first RS resource as a condition.

As one embodiment, the first CSI reporting is generated using at least the channel measurement performed on the first RS resource as a condition.

As one embodiment, the first CSI reporting is generated using the channel information obtained from the measurement of the first RS resource and the interference information obtained from the measurement of the second RS resource as conditions.

As one embodiment, the first CSI reporting is generated using the channel measurement performed on the first RS resource and the interference measurement performed on the second RS resource as conditions.

As one embodiment, the first CSI reporting is generated using the channel information obtained from the measurement of the first RS resource and the interference information obtained from measurements of the second RS resource and the third RS resource as conditions.

As one embodiment, the first CSI reporting is generated using the channel measurement performed on the first RS resource and the interference measurement performed on the second RS resource and the third RS resource as conditions.

As one embodiment, the first CSI configuration information comprises the R index groups.

As one embodiment, the first CSI configuration information comprises first sub-information, and the first sub-information comprises the R index groups.

As one embodiment, the name of the first sub-information comprises non-PMI-PortIndication.

As one embodiment, the first sub-information belongs to a non-PMI-PortIndication domain.

As one embodiment, the name of the first sub-information comprises non-PMI-Port.

As one embodiment, the name of the first sub-information comprises PortIndex.

As one embodiment, the name of the first sub-information comprises PortIndexFor8Ranks.

As one embodiment, the first sub-information comprises at least one of portIndex8, portIndex4, portIndex2 or portIndex1.

As one embodiment, any index in the R index group is a non-negative integer.

As one embodiment, any index in the R index groups is a non-negative integer less than the number of ports of the first RS resource.

As one embodiment, any index in the R index groups is an index of one port of the indicated first RS resource.

As one embodiment, R is not greater than the number of ports of the first RS resource.

As one embodiment, R is equal to the number of ports of the first RS resource.

As one embodiment, the R index groups are respectively configured to the R ranks.

As one embodiment, the number of indexes respectively comprised in the R index groups is respectively equal to the R ranks.

As one embodiment, the R ranks are all not greater than the number of ports of the first RS resource.

As one embodiment, the R ranks are respectively 1,... R.

Typically, the R ranks are respectively R positive integers that are pairwise distinct.

As one embodiment, all indexes comprised in any index group in the R index groups are arranged in the order of layer ordering.

As one embodiment, the arrangement in the order of layer ordering refers to the arrangement in the order of layer ordering from small to large.

As one embodiment, the arrangement in the order of layer ordering refers to the arrangement in the order of layer ordering from large to small.

As one embodiment, for the specific definitions of non-PMI-PortIndication, PortlndexFor8Ranks, portIndex8, portIndex4, portIndex2, and portIndex1, see Chapter 6.3.2 of 3GPP TS 38.331.

As one embodiment, the first port group comprises a port of at least one RS resource.

As one embodiment, the first port group comprises a port of at least one RS resource.

As one embodiment, the first port group comprises at least one port.

As one embodiment, the first RS resource comprises at least one non-zero power port and at least one zero power port.

As one embodiment, the first port group comprises non-zero power ports of the first RS resource.

As one embodiment, the first port group comprises all non-zero power ports of the first RS resource.

As one embodiment, the first port group comprises at least one non-zero power port of the first RS resource.

As one embodiment, at least one port other than the first port group among all ports of the first RS resource is zero-power.

As one embodiment, any port other than the first port group among all ports of the first RS resource is zero-power.

As one embodiment, the first port group comprises active ports of the first RS resource.

As one embodiment, the first port group comprises non-zero power ports of the first RS resource.

As one embodiment, the first port group comprises all non-zero power ports of the first RS resource.

As one embodiment, the first port group comprises at least one non-zero power port of the first RS resource.

As one embodiment, the first RS resource comprises at least one zero power port and at least one non-zero power port.

Typically, the transmit power on one non-zero power port is not 0, and the transmit power on one zero power port is 0.

As one embodiment, the first signaling is an MAC CE signaling.

As one embodiment, the first signaling is a physical layer signaling.

As one embodiment, the first signaling is UE-specific.

As one embodiment, the first signaling is non-UE-specific.

As one embodiment, the first signaling is UE group-specific.

As one embodiment, the first signaling is common to a cell.

As one embodiment, the first signaling is a DCI signaling.

As one embodiment, one domain in the first signaling is used for determining the first port group.

As one embodiment, a plurality of domains in the first signaling are used for determining the first port group.

As one embodiment, a DCI format of the first signaling is used for determining the first port group.

As one embodiment, the first signaling is used for indicating the first port group.

As one embodiment, the first signaling explicitly indicates the first port group.

As one embodiment, the first signaling implicitly indicates the first port group.

As one embodiment, the first signaling is used for determining the zero power port.

As one embodiment, the first signaling is used for determining the non-zero power port.

As one embodiment, the first signaling is used for determining an activated port.

As one embodiment, the first signaling is used for determining a deactivated port.

As one embodiment, the first signaling is used for determining an active port.

As one embodiment, the first signaling is used for determining an inactive port.

As one embodiment, the first signaling is used for determining a muted port.

As one embodiment, the first signaling is used for determining an active CORESET (Control Resource Set).

As one embodiment, the first signaling is used for determining an inactive CORESET.

As one embodiment, the first signaling is used for determining a muted CORESET.

As one embodiment, the first signaling is used for determining a zero power port of the first RS resource.

As one embodiment, the first signaling is used for determining a non-zero power port of the first RS resource.

As one embodiment, the first signaling is used for determining all zero power ports of the first RS resource.

As one embodiment, the first signaling is used for determining all non-zero power ports of the first RS resource.

As one embodiment, the port comprises an antenna port.

As one embodiment, the port comprises a CSI-RS port.

As one embodiment, the port comprises an RS port.

As one embodiment, the first signaling is used for indicating a first RS resource set, and the first port group depends on the first RS resource set.

As one sub-embodiment of the above embodiment, any RS resource in the first RS resource set is activated.

As one sub-embodiment of the above embodiment, any RS resource in the first RS resource set is deactivated.

As one sub-embodiment of the above embodiment, the first port group comprises ports of RS resources in the first RS resource set.

As one sub-embodiment of the above embodiment, the first port group comprises at least one port other than the ports of the RS resources in the first RS resource set.

As one sub-embodiment of the above embodiment, the first port group comprises ports of the RS resources that are quasi co-located (QCL) with the ports of the RS resources in the first RS resource set.

As one sub-embodiment of the above embodiment, the first port group comprises ports of the RS resources that are not quasi co-located with the ports of the RS resources in the first TRS resource set.

As one sub-embodiment of the above embodiment, the first port group comprises ports in the first RS resource that are quasi co-located (QCL) with the ports of the RS resources in the first RS resource set.

As one sub-embodiment of the above embodiment, the first port group comprises ports in the first RS resource that are not quasi co-located (QCL) with the ports of the RS resources in the first RS resource set.

As one embodiment, the first signaling is used for indicating a first TCI (Transmission Configuration Indicator) state group, and the first port group depends on the first TCI state group.

As one sub-embodiment of the above embodiment, any TCI state in the first TCI state group is activated.

As one sub-embodiment of the above embodiment, any TCI state in the first TCI state group is deactivated.

As one sub-embodiment of the above embodiment, the first port group comprises ports of RS resources in the first TCI state group.

As one sub-embodiment of the above embodiment, the first port group comprises at least one port other than the ports of the RS resources in the first TCI state group.

As one sub-embodiment of the above embodiment, the first port group comprises ports of RS resources that are quasi co-located (QCL) with the ports of the RS resources in the first TCI state group.

As one sub-embodiment of the above embodiment, the first port group comprises ports of the RS resources that are not quasi co-located with the ports of the RS resources in the first TCI state group.

As one sub-embodiment of the above embodiment, the first port group comprises ports in the first RS resource that are quasi co-located (QCL) with the ports of the RS resources in the first TCI state group.

As one sub-embodiment of the above embodiment, the first port group comprises ports in the first RS resource that are not quasi co-located (QCL) with the ports of the RS resources in the first TCI state group.

As one embodiment, the first signaling is used for indicating a first CORESET (Control Resource Set) pool, the first port group depends on the first CORESET pool, the first CORESET pool comprises at least one CORESET, and a second CORESET pool comprises at least one CORESET.

As one sub-embodiment of the above embodiment, the first port group comprises ports of RS resources in a TCI state of the first CORESET pool.

As one sub-embodiment of the above embodiment, the first port group comprises at least one port other than the ports of the RS resource in the TCI state of the first CORESET pool.

As one sub-embodiment of the above embodiment, the first port group comprises ports of the RS resources that are quasi co-located with the ports of the RS resources in the TCI state of the first CORESET pool.

As one sub-embodiment of the above embodiment, the first port group comprises ports of the RS resources that are not quasi co-located with the ports of the RS resources in the TCI state of the first CORESET pool.

As one sub-embodiment of the above embodiment, the first port group comprises ports in the first RS resource that are quasi co-located (QCL) with the ports of the RS resources in the TCI state of the first CORESET pool.

As one sub-embodiment of the above embodiment, the first port group comprises ports in the first RS resource that are not quasi co-located (QCL) with the ports of the RS resources in the TCI state of the first CORESET pool.

As one embodiment, the TCI state of the first CORESET pool comprises a TCI state of at least one CORESET in the first CORESET pool.

As one embodiment, the TCI state of the first CORESET pool comprises a TCI state of each CORESET in the first CORESET pool.

Typically, the TCI state of one CORESET is indicative of one TCI state of a QCL parameter of the one CORESET.

As one embodiment, for the specific definitions of the CORESET and the TCI state, see Chapter 10 of 3GPP TS38.213.

As one embodiment, the meaning of "two ports are quasi co-located" comprises: the two ports have at least one identical QCL parameter.

As one embodiment, the meaning of "two ports are quasi co-located" comprises: the two ports have identical QCL parameters.

As one embodiment, the meaning of "two ports are quasi co-located" comprises: the two ports have identical QCL parameters of TypeD.

As one embodiment, the meaning of "two ports are quasi co-located" comprises: the two ports have identical spatial Rx parameters.

As one embodiment, the meaning of "two ports are not quasi co-located" comprises: the two ports have different QCL parameters.

As one embodiment, the meaning of "two ports are not quasi co-located" comprises: the two ports have at least one different QCL parameter.

As one embodiment, the meaning of "two ports are not quasi co-located" comprises: the two ports have different QCL parameters of TypeD.

As one embodiment, the meaning of "two ports are not quasi co-located" comprises: the two ports have different spatial Rx parameters.

As one embodiment, one TCI (Transmission configuration indication) state indicates one quasi co-location relationship.

As one embodiment, one TCI state indicates one or more reference signal resources.

As one embodiment, one TCI state indicates at least one reference signal resource.

As one embodiment, any reference signal resource indicated by one TCI state is one of an SRS (Sounding Reference Signal) resource, a CSI-RS (Channel State Information Reference Signal) resource, or an SS/PBCH (Synchronization Signal/Physical Broadcast Channel) block resource.

As one embodiment, any reference signal resource indicated by one TCI state is the CSI-RS resource or the SS/PBCH block resource.

As one embodiment, one TCI state indicates at least one reference signal resource and a QCL (Quasi-Co-Located) parameter corresponding to each reference signal resource therein.

As one embodiment, one TCI state indicates at least one reference signal resource and a type of a QCL parameter corresponding to each reference signal resource therein.

As one embodiment, the type of the QCL parameter comprises a TypeA, a TypeB, a TypeC and a TypeD.

As one embodiment, the QCL parameter of the TypeA comprises a Doppler shift, a Doppler spread, an average delay, and a delay spread.

As one embodiment, the QCL parameter of the TypeB comprises the Doppler shift and the Doppler spread.

As an embodiment, the QCL parameter of the TypeC comprises the Doppler shift and the average delay.

As one embodiment, the QCL parameter of the TypeD comprises a Spatial Rx parameter.

As one embodiment, for the specific definitions of the TypeA, the TypeB, the TypeC, and the TypeD, see Chapter 5.1.5 of 3GPP TS38.214.

As one embodiment, the QCL parameter comprises one or more of the delay spread, the Doppler spread, the Doppler shift, the average delay, or the Spatial Rx parameter.

As one embodiment, the QCL parameter comprises the Doppler shift, and the Doppler spread.

As one embodiment, the QCL parameter comprises the Doppler shift, and the average delay.

As one embodiment, the QCL parameter comprises the Spatial Rx parameter.

As one embodiment, the QCL parameter comprises at least one of a spatial transmit parameter or the spatial Rx parameter.

As one embodiment, the QCL parameter comprises a Spatial Domain Receive Filter.

As one embodiment, the QCL parameter comprises a spatial domain filter.

As one embodiment, the QCL parameter comprises at least one of a spatial domain transmit filter or the spatial domain receive filter.

As one embodiment, for the specific definitions of the TCI state and the quasi co-location (QCL), see Chapter 5.1.5 of 3GPP TS38.214.

Typically, the reference port group comprises the port of the first RS resource that is indicated by each index in the first index group.

Typically, at least one port in the reference port group is associated with the first port group.

As one embodiment, each port in the reference port group is associated with the first port group.

As one embodiment, part of ports in the reference port group are associated with the first port group.

As one embodiment, the meaning of the sentence "the first CQI is calculated using at least one port in the reference port group as a condition" comprises: the first CQI is calculated using all ports in the reference port group as a condition.

As one embodiment, the meaning of the sentence "the first CQI is calculated using at least one port in the reference port group as a condition" comprises: the first CQI is calculated using part of ports in the reference port group as a condition.

As one embodiment, the meaning of the sentence "the first CQI is calculated using at least one port in the reference port group as a condition" comprises: the first CQI is calculated using all ports in the reference port group that are associated with the first port group as a condition.

As one embodiment, the first rank is not greater than the number of ports comprised in the reference port group.

As one embodiment, the first rank is equal to the number of ports comprised in the reference port group.

As one embodiment, the first rank is not greater than the number of ports of the first RS resource.

As one embodiment, in the calculation of the first CQI, a precoder of the at least one port in the reference port group is an identity matrix.

As one embodiment, the meaning of the sentence "a precoder of the at least one port in the reference port group is an identity matrix" comprises: a precoder of the at least one port in the reference port group is assumed to be an identity matrix.

As one embodiment, the first CQI is calculated not using a PMI as a condition.

As one embodiment, the calculation of the first CQI is independent of a codebook.

As one embodiment, the meaning of the sentence "the first CQI is calculated using a given port group as a condition" comprises: the first CQI is calculated using only a given port group among all ports of the first RS resource as a condition; and the given port group comprises at least one port in the reference port group, or, the given port group comprises all ports in the reference port group, or, the given port group comprises all ports in the reference port group that are only associated with the first port group.

As one embodiment, the meaning of the sentence "the first CQI is calculated using a given port group as a condition" comprises: the reference port group further comprises one port other than the given port group, and the calculation of the first CQI is independent of any port other than the given port group in the reference port group; and the given port group comprises at least one port in the reference port group, or, the given port group comprises all ports in the reference port group, or, the given port group comprises all ports in the reference port group that are only associated with the first port group.

As one embodiment, the meaning of the sentence "the first CQI is calculated using a given port group as a condition" comprises: the precoder of the given port group is assumed to be the identity matrix; and the given port group comprises at least one port in the reference port group, or, the given port group comprises all ports in the reference port group, or, the given port group comprises all ports in the reference port group that are only associated with the first port group.

As one embodiment, the meaning of the sentence "the first CQI is calculated using a given port group as a condition" comprises: the first CQI is calculated not using the PMI (Precoding Matrix Indicator) as a condition; and the given port group comprises at least one port in the reference port group, or, the given port group comprises all ports in the reference port group, or, the given port group comprises all ports in the reference port group that are only associated with the first port group.

As one embodiment, the meaning of the sentence "the first CQI is calculated using a given port group as a condition" comprises: the calculation of the first CQI is independent of the codebook; and the given port group comprises at least one port in the reference port group, or, the given port group comprises all ports in the reference port group, or, the given port group comprises all ports in the reference port group that are only associated with the first port group.

As one embodiment, the meaning of the sentence "the first CQI is calculated using a given port group as a condition" comprises: the first node calculates the first CQI based on that a rank is equal to the number of ports comprised in the given port group, and that different ports in the given port group respectively correspond to different layers; and the given port group comprises at least one port in the reference port group, or, the given port group comprises all ports in the reference port group, or, the given port group comprises all ports in the reference port group that are only associated with the first port group.

As one embodiment, the meaning of the sentence "the first CQI is calculated using a given port group as a condition" comprises: the first node calculates the first CQI based on that the rank is equal to the number of ports comprised in the given port group, and that each port in the given port group respectively sends each layer; and the given port group comprises at least one port in the reference port group, or, the given port group comprises all ports in the reference port group, or, the given port group comprises all ports in the reference port group that are only associated with the first port group.

As one embodiment, the meaning of the sentence "the first CQI is calculated using a given port group as a condition" comprises: the first node calculates the first CQI based on that the rank is equal to the number of ports comprised in the given port group; and the given port group comprises at least one port in the reference port group, or, the given port group comprises all ports in the reference port group, or, the given port group comprises all ports in the reference port group that are only associated with the first port group.

As one embodiment, the meaning of the sentence "the first CQI is calculated using a given port group as a condition" comprises: the first node calculates the first CQI based on a measurement for the given port group; and the given port group comprises at least one port in the reference port group, or, the given port group comprises all ports in the reference port group, or, the given port group comprises all ports in the reference port group that are only associated with the first port group.

As one embodiment, the meaning of the sentence "the first CQI is calculated using a given port group as a condition" comprises: the first node calculates the first CQI based on a channel matrix obtained by the measurement for the given port group; and the given port group comprises at least one port in the reference port group, or, the given port group comprises all ports in the reference port group, or, the given port group comprises all ports in the reference port group that are only associated with the first port group.

Under the limitations of the above methods or embodiments, the specific algorithm for calculating the first CQI is determined by the manufacturer of the first node, or is implementation-related. A typical but non-restrictive implementation is described below:
the first node first performs a measurement for a given port group to obtain a channel parameter matrix H_{r×*t*}, wherein *r* and *t* are respectively the number of receiving antennas and the number of ports comprised in the given port group; the given port group comprises at least one port in the reference port group, or, the given port group comprises all ports in the reference port group, or, the given port group comprises all ports in the reference port group that are only associated with the first port group; under the condition that a precoding matrix W_{t×*l*} is used, the coded channel parameter matrix is H_{r×*t*}·W_{t×*l*}, wherein *l* is a rank or the number of layers, in one case, is a positive integer not greater than, and in another case, the precoding matrix is an identity matrix, wherein *t = l*; and the equivalent channel capacity of H_{r×*t*} · W_{tx*l*} is calculated using, for example, an SINR (Signal Interference Noise Ratio), an EESM (Exponential Effective SINR Mapping), or a RBIR (Received Block mean mutual Information Ratio) criterion, and then the first CQI is determined by the equivalent channel capacity through table lookup or the like. Generally speaking, the calculation of the equivalent channel capacity requires the first node to estimate the interference (comprising noise), and the first node may use at least the second RS resource in the second RS resource or the third RS resource in the present application to more accurately measure the interference. Generally speaking, the direct mapping of the equivalent channel capacity to the value of CQI depends on the receiver performance or hardware-related factors such as modulation mode.

Typically, only the rank that satisfies the first condition among the R ranks may be selected as the first rank.

Typically, the candidate range of the first rank comprises only the rank that satisfies the first condition among the R ranks.

Typically, the first rank is one rank that satisfies the first condition among the R ranks.

As one embodiment, the meaning of "one port of the first RS resource is associated with the first port group" comprises: one port of the first RS resource belongs to the first port group.

As one embodiment, the meaning of "one port of the first RS resource is associated with the first port group" comprises: one port of the first RS resource is quasi co-located with one port in the first port group.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 communicating with the UE201 via a sidelink, an NG-RAN (Next-Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides packet switching services, but those skilled in the art will readily appreciate that the various concepts presented throughout the present application can be extended to networks that provide circuit switching services. The NG-RAN202 comprises NR (New Radio) Node B (gNB)203 and other gNBs 204. The gNB203 provides user and control plane protocol terminations toward the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smartphone, a Session Initiation Protocol (SIP) phone, a laptop computer, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land transportation vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 via an S1/NG interface. The 5GC/EPC210 comprises an MME (Mobility Management Entity)/AMF (Authentication Management Field)/SMF (Session Management Function) 211, other MMEs/AMFs/SMFs 214, an S-GW (Service Gateway)/UPF (User Plane Function) 212, and a P-GW (Packet Date Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an intranet, an IMS (IP multimedia subsystem) and a packet switching service.

As one embodiment, a first node in the present application comprises the UE201.

As one embodiment, the first node in the present application comprises the UE241.

As one embodiment, a second node in the present application comprises the gNB203.

### Embodiment 3

Embodiment 3 illustrates a schematic diagram of an embodiment of a radio protocol architecture for a user plane and a control plane according to one embodiment of the present application, as shown in FIG. 3.

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 illustrates the radio protocol architecture for the control plane 300 between a first communication node device (UE, a gNB, or an RSU in V2X) and a second communication node device (a gNB, UE, or an RSU in V2X), or between two pieces of UE, using three layers: a layer 1, a layer 2, and a layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301 and is responsible for a link between the first communication node device and the second communication node device, or between two pieces of UE. The L2 layer 305 comprises an MAC (Medium Access Control) sub-layer 302, an RLC (Radio Link Control) sub-layer 303, and a PDCP (Packet Data Convergence Protocol) sub-layer 304, which terminate at the second communication node device. The PDCP sub-layer 304 provides multiplexing between different radio bearers and logical channels. The PDCP sub-layer 304 also provides security by encrypting data packets, and provides inter-cell mobility support of the first communication node device between the second communication node devices. The RLC sub-layer 303 provides segmentation and reassembly of upper-layer data packets, retransmission of lost data packets, and reordering of data packets to compensate for out-of-order reception due to an HARQ. The MAC sub-layer 302 provides multiplexing between logical and transport channels. The MAC sub-layer 302 is also responsible for allocating various radio resources (e.g., resource blocks) in one cell between the first communication node devices. The MAC sub-layer 302 is also responsible for HARQ operations. An RRC (Radio Resource Control) sub-layer 306 in a Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sub-layers in the control plane 300 for a physical layer 351, a PDCP sub-layer 354 in an L2 layer 355, an RLC sub-layer 353 in the L2 layer 355, and an MAC sub-layer 352 in the L2 layer 355, but the PDCP sub-layer 354 also provides header compression for upper-layer data packets to reduce radio transmission overhead. The L2 layer 355 in the user plane 350 further comprises an SDAP (Service Data Adaptation Protocol) sub-layer 356, and the SDAP sub-layer 356 is responsible for mapping between a QoS flow and a data radio bearer (DRB) to support the diversity of services. Although not shown in the figure, the first communication node device may have several upper layers above the L2 layer 355, comprising a network layer (e.g., an IP layer) terminating at the P-GW on the network side and an application layer terminating at the other end of the connection (e.g., remote UE and a server).

As one embodiment, the radio protocol architecture in FIG. 3 is applicable to the first node in the present application.

As one embodiment, the radio protocol architecture in FIG. 3 is applicable to the second node in the present application.

As one embodiment, first CSI configuration information is generated at the RRC sub-layer 306.

As one embodiment, a first signaling is generated at the MAC sub-layer 302.

As one embodiment, the first signaling is generated at the MAC sub-layer 352.

As one embodiment, the first signaling is generated at the PHY301.

As one embodiment, the first signaling is generated at the PHY351.

As one embodiment, a first RS resource is generated at the PHY301.

As one embodiment, the first RS resource is generated at the PHY351.

As one embodiment, a first RS resource group is generated at the PHY301.

As one embodiment, the first RS resource group is generated at the PHY351.

As one embodiment, a second RS resource group is generated at the PHY301.

As one embodiment, the second RS resource group is generated at the PHY351.

As one embodiment, first CSI reporting is generated at the PHY301.

As one embodiment, the first CSI reporting is generated at the PHY351.

### Embodiment 4

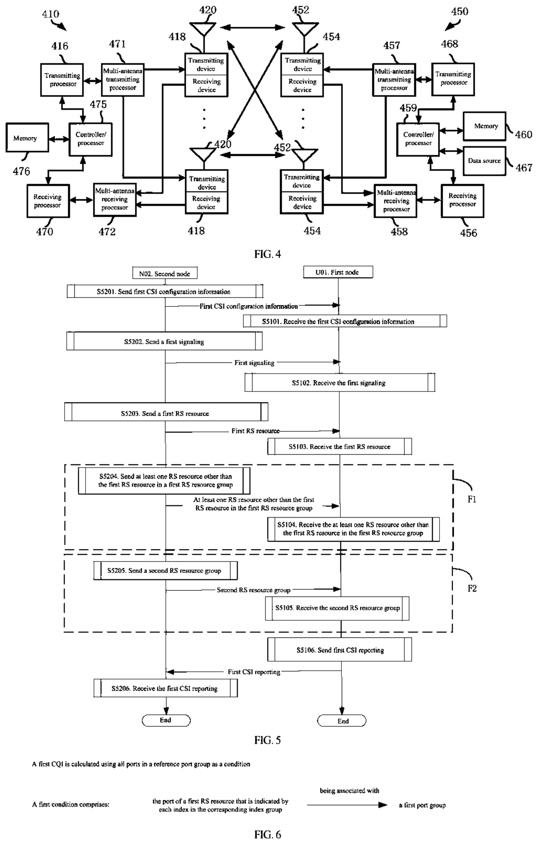

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper-layer data packets from a core network are provided to the controller/processor 475. The controller/processor 475 implements the functionality of an L2 layer. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signalings to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, and constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a sub-carrier, multiplexes the modulated symbols with a reference signal (e.g., pilot) in a time domain and/or frequency domain, and then uses an inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses the fast Fourier transform (FFT) to convert the baseband multi-carrier symbol stream from a time domain to a frequency domain after the receiving analog precoding/beamforming operation. In the frequency domain, a physical layer data signal and a reference signal are demultiplexed by the receiving processor 456, wherein the reference signal will be used for a channel estimation, and the data signal is recovered after multi-antenna detection in the multi-antenna receiving processor 458 to any parallel stream destined for the second communication device 450. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In a DL (Downlink), the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing. The controller/processor 459 is also responsible for using an acknowledgement (ACK) and /or negative acknowledgement (NACK) protocol to perform error detection to support the HARQ operations.

In transmission from the second communication device 450 to the first communication device 410, at the second communication device 450, the data source 467 is used for providing upper-layer data packets to the controller/processor 459. The data source 467 represents all protocol layers above the L2 layer. Similar to the transmission function at the first communication device 410 described in the DL, the controller/processor 459 implements header compression, encryption, packet segmentation and reordering, and multiplexing between logical and transport channels based on radio resource allocation of the first communication device 410, and implements the functions of the L2 layer for the user plane and the control plane. The controller/processor 459 is also responsible for HARQ operations, retransmission of lost packets, and signalings to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then the transmitting processor 468 will modulate a generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 in the transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides demultiplexing between transport and logical channels, packet reassembly, decryption, header decompression and control signal processing to recover upper-layer data packets from the second communication device 450. The upper-layer data packets from the controller/processor 475 may be provided to the core network. The controller/processor 475 is also responsible for using an ACK and/or NACK protocol to perform error detection to support the HARQ operations.

As one embodiment, the second communication device 450 comprises: at least one processor and at least one memory, the at least one memory comprising computer program codes; and the at least one memory and the computer program codes being configured to be used together with the at least one processor. The second communication device 450 apparatus at least: receives first CSI configuration information; receives a first signaling; receives a first RS resource; and sends first CSI reporting, wherein, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

As one embodiment, the second communication device 450 comprises: a memory storing a computer-readable instruction program, the computer-readable instruction program generates actions when executed by at least one processor, the action comprising: receiving the first CSI configuration information; receiving a first signaling; receiving a first RS resource; and sending first CSI reporting, wherein, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

As one embodiment, the first communication device 410 comprises: at least one processor and at least one memory, the at least one memory comprising computer program codes; and the at least one memory and the computer program codes being configured to be used together with the at least one processor. The first communication device 410 apparatus at least: sends first CSI configuration information; sends a first signaling; sends a first RS resource; and receives first CSI reporting, wherein, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises the first rank and the first CQI, the first rank is one of the R ranks, the first index group is the index group among the R index groups that corresponds to the first rank, the reference port group comprises all ports of the first RS resource that are indicated by the first index group, and the first CQI is calculated using at least one port in the reference port group as a condition; the first rank is selected only from ranks among the R ranks that satisfy the first condition; and the first condition comprises the port of the first RS resource that is indicated by at least one index in the corresponding index group being associated with the first port group.

As one embodiment, the first communication device 410 comprises: a memory storing a computer-readable instruction program, the computer-readable instruction program generates actions when executed by at least one processor, the action comprising: sending the first CSI configuration information; sending the first signaling; sending the first RS resource; and receiving the first CSI reporting, wherein, the first CSI configuration information is used for indicating the first RS resource, and the measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining the first port group; the first CSI reporting comprises the first rank and the first CQI, the first rank is one of the R ranks, the first index group is the index group among the R index groups that corresponds to the first rank, the reference port group comprises all ports of the first RS resource that are indicated by the first index group, and the first CQI is calculated using at least one port in the reference port group as a condition; the first rank is selected only from ranks among the R ranks that satisfy the first condition; and the first condition comprises the port of the first RS resource that is indicated by at least one index in the corresponding index group being associated with the first port group.

As one embodiment, a first node in the present application comprises the second communication device 450.

As one embodiment, a second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first CSI configuration information in the present application; and at least one of {the antenna 420, the transmitting device 418, the transmitting processor 416, the multi-antenna transmitting processor 471, the controller/processor 475, and the memory 476} is used for sending the first CSI configuration information in the present application.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the receiving device 454, the receiving processor 456, the multi-antenna receiving processor 458, the controller/processor 459, the memory 460, and the data source 467} is used for receiving the first RS resource in the present application; and at least one of {the antenna 420, the transmitting device 418, the transmitting processor 416, the multi-antenna transmitting processor 471, the controller/processor 475, and the memory 476} is used for sending the first RS resource in the present application.

As one embodiment, at least one of {the antenna 452, the receiving device 454, the receiving processor 456, the multi-antenna receiving processor 458, the controller/processor 459, the memory 460, and the data source 467} is used for receiving at least one RS resource other than the first RS resource in a first RS resource group in the present application; and at least one of {the antenna 420, the transmitting device 418, the transmitting processor 416, the multi-antenna transmitting processor 471, the controller/processor 475, and the memory 476} is used for sending at least one RS resource other than the first RS resource in the first RS resource group in the present application.

As one embodiment, at least one of {the antenna 452, the receiving device 454, the receiving processor 456, the multi-antenna receiving processor 458, the controller/processor 459, the memory 460, and the data source 467} is used for receiving a second RS resource group in the present application; and at least one of {the antenna 420, the transmitting device 418, the transmitting processor 416, the multi-antenna transmitting processor 471, the controller/processor 475, and the memory 476} is used for sending the second RS resource group in the present application.

As one embodiment, at least one of {the antenna 452, the transmitting device 454, the transmitting processor 468, the multi-antenna transmitting processor 457, the controller/processor 459, and the memory 460} is used for sending the first CSI reporting in the present application; and at least one of {the antenna 420, the receiving device 418, the receiving processor 470, the multi-antenna receiving processor 472, the controller/processor 475, and the memory 476} is used for receiving the first CSI reporting in the present application.

### Embodiment 5

Embodiment 5 illustrates a flowchart of radio transmission according to one embodiment of the present application, as shown in FIG. 5. In the FIG. 5, a first node U01 and a second node N02 are two communication nodes transmitted via an air interface, wherein the steps in boxes F1 and F2 are optional.

For **the first node U01**, in step S5101, first CSI configuration information is received; in step S5102, a first signaling is received; in step S5103, a first RS resource is received; in step S5104, at least one RS resource other than the first RS resource in a first RS resource group is received; in step S5105, a second RS resource group is received; and in step S5106, first CSI reporting is sent;

For **the second node N02**, in step S5201, the first CSI configuration information is sent; in step S5202, the first signaling is sent; in step S5203, the first RS resource is sent; in step S5204, at least one RS resource other than the first RS resource in the first RS resource group is sent; in step S5205, the second RS resource group is sent; and in step S5206, the first CSI reporting is received;

In Embodiments 5, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

As one embodiment, the first RS resource group is configured for channel measurement, and the second RS resource group is configured for interference measurement; the first CSI reporting comprises a first RS resource indicator, and the first RS resource indicator is used for indicating the first RS resource from the first RS resource group; and the first rank and the first CQI are obtained using the first RS resource indicator as a condition.

As one embodiment, the first RS resource group comprises M RS resources for channel measurement, the second RS resource group comprises M RS resources for interference measurement, and the M RS resources for channel measurement respectively correspond to the M RS resources for interference measurement on a one-to-one basis.

As one sub-embodiment of the above embodiment, a first given RS resource is any RS resource among the M RS resources for channel measurement; and when the first given RS resource is used for channel measurement, only one RS resource corresponding to the first given RS resource among the M RS resources for interference measurement is used for interference measurement.

As one embodiment, the first RS resource indicator is CRI.

As one embodiment, the first RS resource indicator is used for identifying the first RS resource in the first RS resource group.

As one embodiment, the first RS resource indicator comprises a position of the first RS resource in the first RS resource group.

As one embodiment, the first RS resource indicator comprises an index of the first RS resource in the first RS resource group.

As one embodiment, the first rank and the first CQI are generated using the channel measurement performed on the first RS resource and the interference measurement performed on a second RS resource as conditions, and the second RS resource belongs to the second RS resource group.

As one embodiment, the first rank and the first CQI are generated using the channel measurement performed on the first RS resource and the interference measurement performed on the second RS resource and a third RS resource as conditions, and the second RS resource belongs to the second RS resource group.

As one embodiment, the first rank and the first CQI are generated using the channel measurement performed on the first RS resource and the interference measurement performed on the second RS resource and the third RS resource as conditions, the second RS resource belongs to the second RS resource group, and the third RS resource belongs to a third RS resource group.

As one embodiment, the meaning of the sentence "the first rank and the first CQI are obtained using the first RS resource indicator as a condition" comprises: the first RS resource indicator is used for indicating the first RS resource from the first RS resource group, and the first rank and the first CQI are obtained using the channel information generated by a measurement for the first RS resource as a condition.

As one embodiment, the meaning of the sentence "the first rank and the first CQI are obtained using the first RS resource indicator as a condition" comprises: the first RS resource indicator is used for indicating the first RS resource from the first RS resource group, and the first rank and the first CQI are obtained using the channel measurement performed on the first RS resource as a condition.

As one embodiment, the meaning of the sentence "the first rank and the first CQI are obtained using the first RS resource indicator as a condition" comprises: the first RS resource indicator is used for indicating the first RS resource from the first RS resource group, and the first rank and the first CQI are obtained using only the first RS resource in the first RS resource group as a condition.

As one embodiment, the meaning of the sentence "the first rank and the first CQI are obtained using the first RS resource indicator as a condition" comprises: the first RS resource indicator is used for indicating the first RS resource from the first RS resource group, and calculations of the first rank and the first CQI are related to only the first RS resource in the first RS resource group.

### Embodiment 6

Embodiment 6 illustrates a schematic diagram of a first CQI according to one embodiment of the present application, as shown in FIG. 6.

In Embodiment 6, a first condition comprises the port of a first RS resource that is indicated by each index in the corresponding index group being associated with a first port group; and the first CQI is calculated using all ports in a reference port group as a condition.

### Embodiment 7

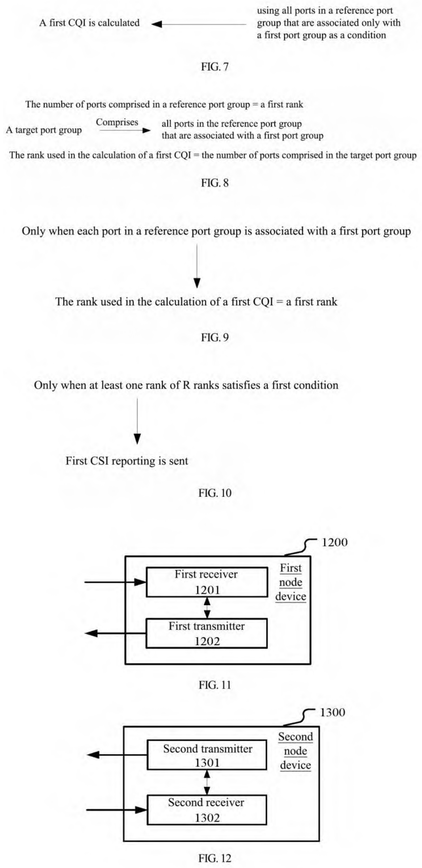

Embodiment 7 illustrates a schematic diagram of a first CQI according to another embodiment of the present application, as shown in FIG. 7.

In Embodiment 7, the first CQI is calculated using all ports in a reference port group that are associated only with a first port group as a condition.

### Embodiment 8

Embodiment 8 illustrates a schematic diagram of a first CQI according to another embodiment of the present application, as shown in FIG. 8.

In Embodiment 8, the number of ports comprised in a reference port group is equal to a first rank, a target port group comprises all ports in the reference port group that are associated with a first port group, and the rank used in the calculation of the first CQI is equal to the number of ports comprised in the target port group.

Typically, the rank used in the calculation of the first CQI is equal to the number of layers used in the calculation of the first CQI.

Typically, the rank used in the calculation of the first CQI is equal to the number of layers assumed in the calculation of the first CQI.

Typically, the rank used in the calculation of the first CQI is the rank assumed in the calculation of the first CQI.

### Embodiment 9

Embodiment 9 illustrates a schematic diagram of a first CQI according to another embodiment of the present application, as shown in FIG. 9.

In Embodiment 9, the rank used in the calculation of the first CQI is equal to a first rank only when each port in a reference port group is associated with a first port group.

As one embodiment, the rank used in the calculation of the first CQI is smaller than the first rank.

As one embodiment, the rank used in the calculation of the first CQI is equal to the first rank.

As one embodiment, the rank used in the calculation of the first CQI is not greater than the first rank.

As one embodiment, the rank used in the calculation of the first CQI is less than the first rank when only part of ports in the reference port group are associated with the first port group.

### Embodiment 10

Embodiment 10 illustrates a schematic diagram of first CSI reporting according to one embodiment of the present application, as shown in FIG. 10.

In Embodiment 10, the first CSI reporting is sent only when at least one rank of R ranks satisfies a first condition.

As one embodiment, the first CSI reporting is generated only when at least one rank of the R ranks satisfies the first condition.

### Embodiment 11

Embodiment 11 illustrates a structural block diagram of a processing apparatus used in a first node device according to one embodiment of the present application, as shown in FIG. 11. In FIG. 11, a processing apparatus 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1202 comprises at least one of {the antenna 452, a transmitting device 454, a transmitting processor 468, a multi-antenna transmitting processor 457, the controller/processor 459, the memory 460, and the data source 467} in Embodiment 4.
The first receiver 1201 receives first CSI configuration information; receive a first signaling; and receives a first RS resource;
A first transmitter 1202 sends first CSI reporting;
   In Embodiments 11, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

As one embodiment, the first condition comprises the port of the first RS resource that is indicated by each index in the corresponding index group being associated with the first port group; and the first CQI is calculated using all ports in the reference port group as a condition.

As one embodiment, the first CQI is calculated using all ports in the reference port group that are associated only with the first port group as a condition.

As one embodiment, the number of ports comprised in the reference port group is equal to the first rank, a target port group comprises all ports in the reference port group that are associated with the first port group, and the rank used in the calculation of the first CQI is equal to the number of ports comprised in the target port group.

As one embodiment, the rank used in the calculation of the first CQI is equal to the first rank only when each port in the reference port group is associated with the first port group.

As one embodiment, the first CSI reporting is sent only when at least one rank of the R ranks satisfies the first condition.

As one embodiment, the first receiver 1201 receives at least one RS resource other than the first RS resource in a first RS resource group; and receives a second RS resource group, wherein, the first RS resource group is configured for channel measurement, and the second RS resource group is configured for interference measurement; the first CSI reporting comprises a first RS resource indicator, and the first RS resource indicator is used for indicating the first RS resource from the first RS resource group; and the first rank and the first CQI are obtained using the first RS resource indicator as a condition.

### Embodiment 12

Embodiment 12 illustrates a structural block diagram of a processing apparatus used in a second node device according to one embodiment of the present application, as shown in FIG. 12. In FIG. 12, a processing apparatus 1300 in the second node device comprises a second transmitter 1301 and a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1302 comprises at least one of {the antenna 420, a receiving device 418, a receiving processor 470, a multi-antenna receiving processor 472, the controller/processor 475, and the memory 476} in Embodiment 4.

The second transmitter 1301 sends first CSI configuration information; sends a first signaling; and sends a first RS resource.

The second receiver 1302 receives first CSI reporting.

In Embodiments 12, the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

As one embodiment, the first condition comprises the port of the first RS resource that is indicated by each index in the corresponding index group being associated with the first port group; and the first CQI is calculated using all ports in the reference port group as a condition.

As one embodiment, the first CQI is calculated using all ports in the reference port group that are associated only with the first port group as a condition.

As one embodiment, the number of ports comprised in the reference port group is equal to the first rank, a target port group comprises all ports in the reference port group that are associated with the first port group, and the rank used in the calculation of the first CQI is equal to the number of ports comprised in the target port group.

As one embodiment, the rank used in the calculation of the first CQI is equal to the first rank only when each port in the reference port group is associated with the first port group.

As one embodiment, the first CSI reporting is sent only when at least one rank of the R ranks satisfies the first condition.

As one embodiment, the second transmitter 1301 sends at least one RS resource other than the first RS resource in a first RS resource group; and sends a second RS resource group, wherein, the first RS resource group is configured for channel measurement, and the second RS resource group is configured for interference measurement; the first CSI reporting comprises a first RS resource indicator, and the first RS resource indicator is used for indicating the first RS resource from the first RS resource group; and the first rank and the first CQI are obtained using the first RS resource indicator as a condition.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include, but are not limited to, drones, communication modules on drones, remote-controlled aircrafts, aircrafts, small aircrafts, mobile phones, tablet computers, notebooks, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes, but is not limited to, a macro cellular base station, a micro cellular base station, a Femtocell, a relay base station, a gNB (NR node B), a TRP (Transmitter Receiver Point) and other wireless communication devices.

The above is only a preferred embodiment of the present application and is not used to limit the scope of protection of the present application. Any changes and modifications made based on the embodiments described in the specification, if similar partial or complete technical effects can be obtained, should be deemed obvious and fall within the protection scope of the present invention.

## Claims

1. A first node device used for wireless communication, comprising:
a first receiver, receiving first CSI configuration information, receiving a first signaling, and receiving a first RS resource; and
a first transmitter, sending first CSI reporting;
wherein the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

2. The first node device according to claim 1, wherein the first condition comprises the port of the first RS resource that is indicated by each index in the corresponding index group being associated with the first port group; and the first CQI is calculated using all ports in the reference port group as a condition.

3. The first node device according to claim 1, wherein the first CQI is calculated using all ports in the reference port group that are associated only with the first port group as a condition.

4. The first node device according to claim 3, wherein the number of ports comprised in the reference port group is equal to the first rank, a target port group comprises all ports in the reference port group that are associated with the first port group, and the rank used in the calculation of the first CQI is equal to the number of ports comprised in the target port group.

5. The first node device according to claim 3 or 4, wherein the rank used in the calculation of the first CQI is equal to the first rank only when each port in the reference port group is associated with the first port group.

6. The first node device according to any one of claims 1 to 5, wherein the first CSI reporting is sent only when at least one rank of the R ranks satisfies the first condition.

7. The first node device according to any one of claims 1 to 6, comprising:
receiving at least one RS resource other than the first RS resource in a first RS resource group; and
receiving a second RS resource group;
wherein the first RS resource group is configured for channel measurement, and the second RS resource group is configured for interference measurement; the first CSI reporting comprises a first RS resource indicator, and the first RS resource indicator is used for indicating the first RS resource from the first RS resource group; and the first rank and the first CQI are obtained using the first RS resource indicator as a condition.

8. A second node device used for wireless communication, comprising:
a second transmitter, sending first CSI configuration information, sending a first signaling, and sending a first RS resource; and
a second receiver, receiving first CSI reporting;
wherein the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

9. The second node device according to claim 8, wherein the first condition comprises the port of the first RS resource that is indicated by each index in the corresponding index group being associated with the first port group; and the first CQI is calculated using all ports in the reference port group as a condition.

10. The second node device according to claim 8, wherein the first CQI is calculated using all ports in the reference port group that are associated only with the first port group as a condition.

11. The second node device according to claim 10, wherein the number of ports comprised in the reference port group is equal to the first rank, a target port group comprises all ports in the reference port group that are associated with the first port group, and the rank used in the calculation of the first CQI is equal to the number of ports comprised in the target port group.

12. The second node device according to claim 10 or 11, wherein the rank used in the calculation of the first CQI is equal to the first rank only when each port in the reference port group is associated with the first port group.

13. The second node device according to any one of claims 8 to 12, wherein the first CSI reporting is sent only when at least one rank of the R ranks satisfies the first condition.

14. The second node device according to any one of claims 8 to 13, comprising:
sending at least one RS resource other than the first RS resource in a first RS resource group; and
sending a second RS resource group;
wherein the first RS resource group is configured for channel measurement, and the second RS resource group is configured for interference measurement; the first CSI reporting comprises a first RS resource indicator, and the first RS resource indicator is used for indicating the first RS resource from the first RS resource group; and the first rank and the first CQI are obtained using the first RS resource indicator as a condition.

15. A method in a first node used for wireless communication, comprising:
receiving first CSI configuration information; receiving a first signaling; receiving a first RS resource; and
sending first CSI reporting;
wherein the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

16. The method according to claim 15, wherein the first condition comprises the port of the first RS resource that is indicated by each index in the corresponding index group being associated with the first port group; and the first CQI is calculated using all ports in the reference port group as a condition.

17. The method according to claim 15, wherein the first CQI is calculated using all ports in the reference port group that are associated only with the first port group as a condition.

18. The method according to claim 17, wherein the number of ports comprised in the reference port group is equal to the first rank, a target port group comprises all ports in the reference port group that are associated with the first port group, and the rank used in the calculation of the first CQI is equal to the number of ports comprised in the target port group.

19. The method according to claim 17 or 18, wherein the rank used in the calculation of the first CQI is equal to the first rank only when each port in the reference port group is associated with the first port group.

20. The method according to any one of claims 15 to 19, wherein the first CSI reporting is sent only when at least one rank of the R ranks satisfies the first condition.

21. The method according to any one of claims 15 to 20, comprising:
receiving at least one RS resource other than the first RS resource in a first RS resource group; and
receiving a second RS resource group;
wherein the first RS resource group is configured for channel measurement, and the second RS resource group is configured for interference measurement; the first CSI reporting comprises a first RS resource indicator, and the first RS resource indicator is used for indicating the first RS resource from the first RS resource group; and the first rank and the first CQI are obtained using the first RS resource indicator as a condition.

22. A method in a second node used for wireless communication, comprising:
sending first CSI configuration information; sending a first signaling; sending a first RS resource; and
receiving first CSI reporting;
wherein the first CSI configuration information is used for indicating the first RS resource, and a measurement for the first RS resource is used for generating the first CSI reporting; the first CSI configuration information is used for indicating R index groups, any index group in the R index groups comprises at least one index, and any index in the R index groups is used for indicating a port of the first RS resource; the R index groups respectively correspond to R ranks on a one-to-one basis, the R ranks are pairwise distinct, and R is a positive integer greater than 1; the first signaling is used for determining a first port group; the first CSI reporting comprises a first rank and a first CQI, the first rank is one of the R ranks, a first index group is an index group among the R index groups that corresponds to the first rank, a reference port group comprises all ports of the first RS resource that are indicated by the first index group, and the first CQI is calculated using at least one port in the reference port group as a condition; the first rank is selected only from ranks among the R ranks that satisfy a first condition; and the first condition comprises the port of the first RS resource that is indicated by at least one index in the corresponding index group being associated with the first port group.

23. The method according to claim 22, wherein the first condition comprises the port of the first RS resource that is indicated by each index in the corresponding index group being associated with the first port group; and the first CQI is calculated using all ports in the reference port group as a condition.

24. The method according to claim 22, wherein the first CQI is calculated using all ports in the reference port group that are associated only with the first port group as a condition.

25. The method according to claim 24, wherein the number of ports comprised in the reference port group is equal to the first rank, a target port group comprises all ports in the reference port group that are associated with the first port group, and the rank used in the calculation of the first CQI is equal to the number of ports comprised in the target port group.

26. The method according to claim 24 or 25, wherein the rank used in the calculation of the first CQI is equal to the first rank only when each port in the reference port group is associated with the first port group.

27. The method according to any one of claims 22 to 26, wherein the first CSI reporting is sent only when at least one rank of the R ranks satisfies the first condition.

28. The method according to any one of claims 22 to 27, comprising:
sending at least one RS resource other than the first RS resource in a first RS resource group; and
sending a second RS resource group;
wherein the first RS resource group is configured for channel measurement, and the second RS resource group is configured for interference measurement; the first CSI reporting comprises a first RS resource indicator, and the first RS resource indicator is used for indicating the first RS resource from the first RS resource group; and the first rank and the first CQI are obtained using the first RS resource indicator as a condition.
